# EUROPEAN PATENT APPLICATION

(11) **EP 4 672 583 A1**
(43) Date of publication of application: **31.12.2025**
(21) Application number: 24185039.5
(22) Date of filing: 27.06.2024
(51) Int. Cl.: H02M 1/36, H02M 7/219, H02P 13/06, G05F 1/46

(54) **AN ELECTROLYZER POWER SUPPLY SYSTEM, A METHOD FOR OPERATING AN ELECTROLYSIS SYSTEM, A COMPUTER PROGRAM, A COMPUTER-READABLE STORAGE MEDIUM, A CONTROLLER AND AN ELECTROLYSIS SYSTEM**

(71) Applicant: Siemens Energy Global GmbH & Co. KG, 81739 München (DE)
(72) Inventor: Craciun, Bogdan, 91052 Erlangen (DE); Bendig, Marvin, 90513 Zirndorf (DE); Langenberg, Nils, 90461 Nürnberg (DE); Loku, Fisnik, 90439 Nürnberg (DE); Schumann, Sven, 91452 Wilhermsdorf (DE)

(57) **Abstract**

The present invention relates to an electrolyzer power supply system (1) which comprises a transformer (2), particularly a medium to low voltage transformer (2), and a converter (3) which is electrically connected to the transformer (2), wherein the transformer (2) is adapted to receive an electrical power output (4) from an electrical power source (5) and to provide the electrical power output (4) to the converter (3), wherein the converter (3) is adapted to convert the electrical power output (4) into an electrical power input (6) for an electrolyzer (7). According to the invention, the transformer (2) is an on-load tap changing transformer (2) and the converter (3) is a self-commutated converter (3), wherein a tap selection of the on-load tap changing transformer (2), particularly between a first tap and a second tap, is only changed at a tap changing voltage (*U_{Tap}*) of the electrolyzer (7).

## Description

### Technical Field

The present invention relates to an electrolyzer power supply system, a method for operating an electrolysis system, a computer program, a computer-readable storage medium having stored thereon said computer program, a controller and an electrolysis system.

### Technological Background

The present application targets the operation of a power supply of an electrolysis system that overcomes the limitation of previous market existing solutions and which optimizes the converter operation for electrolysis applications.

### Summary of the invention

It is an object of the present invention to provide an improved electrolyzer power supply system and an improved method for operating an electrolysis system.

A solution is provided by the subject matter according to the independent claims. Advantageous additional embodiments of the invention are described by the dependent claims, the following description and the figures.

The invention relates to an electrolyzer power supply system comprising a transformer, particularly a medium to low voltage transformer, and a converter which is electrically connected to the transformer, wherein the transformer is adapted to receive an electrical power output from an electrical power source and to provide the electrical power output to the converter, wherein the converter is adapted to convert the electrical power output into an electrical power input for an electrolyzer.

According to the invention, the transformer is an on-load tap changing transformer and the converter is a self-commutated converter.

In other words, the electrolyzer power supply system may comprise an on-load tap changing transformer and an insulated gate bipolar transistor (IGBT) type converter, which may be operated together with the on-load tap changing transformer and which together may provide the electrical power input to the electrolyzer. The electrolyzer may be adapted to transform the electrical power input into an energy carrier by means of an electrolysis process. The energy carrier may be hydrogen, for instance. The on-load tap changing transformer may be a transformer which may comprise an on-load tap changer.

The transformer may comprise multiple windings and/or may comprise a plurality of multiple transformers, particularly a series of multiple transformers. The tap changer may be adapted to change a turn ratio of the transformer, particularly at a converter winding of the transformer which may be electrically connected to the converter. The converter may be a single converter or may comprise a plurality of converters, which particularly are electrically connected in series and/or in parallel.

The electrical power source may be at least one generator of an electrical power station, particularly a renewable electrical power station, and/or an electrical grid. The electrical grid may comprise at least one transmission line between the electrical power source and the electrolyzer power supply system in an island operation mode or a plurality thereof in a network operation mode.

The converter may be adapted to convert the alternating current electrical power output from the electrical power source, which is received by the converter from the on-load tap changing transformer, into a direct current electrical power input for the electrolyzer. Additionally, the converter may be adapted to drop and/or boost the direct voltage for the electrolyzer. Thus, the converter may be self-commutated, such as an IGBT based converter. The electrolyzer power supply system may hence be adapted to provide the direct current electrical power input to the electrolyzer.

This provides the technical effect that the number of converters which is needed for the entire lifetime of the electrolyzer from beginning of life to end of life of the electrolyzer can be reduced. Further, the combined operation of the on-load tap changing transformer and the self-commutated converter can avoid the necessity to add any other additional converters to be used for an extended pre-charge operation, such as thyristor based converters. Further, the operation of the on-load tap changing transformer allows the electrolyzer power supply system to operate at an increased alternating voltage of the electrical power output from the electrical power source and can thus decrease a corresponding alternating current of the electrical power output from the electrical power source, thereby providing an improved efficiency. Further, a feedback of current harmonics into the electrical grid from an operation of the converter can be reduced.

The electrolyzer power supply system and the method for operating an electrolysis system also include embodiments by which additional advantages are obtained.

In one embodiment, the self-commutated converter is adapted to adjust a voltage of the electrical power input to a polarization voltage of the electrolyzer at a selected first tap of the on-load tap changing transformer, wherein the polarization voltage particularly is lower than a minimum operating voltage of the electrolyzer. In other words, the self-commutated converter may be adapted to drop and/or boost the direct current voltage of the electrical energy input to the polarization voltage of the electrolyzer when the first tap of the on-load tap changing transformer is selected. The polarization voltage may provide an initiating polarization of the electrolyzer, wherein particularly an electrolysis process in the electrolyzer does not commence. For instance, when the first tap is selected, the on-load tap changing transformer may be adapted to provide a voltage of the electrical power output to the converter such that such that the converter may rectify the voltage of the electrical power output from the on-load tap changing transformer to the direct polarization voltage of the electrolyzer. This provides the advantage that any other pre-charge operation converters such as additional thyristor based converters may not be needed.

In one embodiment, the self-commutated converter is adapted to adjust the voltage of the electrical power input to a tap changing voltage of the electrolyzer, which particularly is higher than or equal to the minimum operating voltage of the electrolyzer, at the selected first tap and/or at a selected second tap of the on-load tap changing transformer. In other words, the self-commutated converter may be adapted to boost the direct current voltage of the electrical power input from the polarization voltage to the tap changing voltage when the first tap of the on-load tap changing transformer is selected.

Additionally, the converter may be adapted to drop the voltage from a rated operating voltage to the tap changing voltage when the second of the on-load tap changing transformer is selected. When the second tap is selected, the on-load tap changing transformer may be adapted to provide an increased voltage of the electrical power output to the converter than when the first tap is selected, particularly on a converter side of the on-load tap changing transformer. This provides the advantage that the electrolyzer can be operated safely, particularly during a ramp-up and a ramp-down procedure, since the on-load tap changing transformer may only be operated when the tap changing voltage or minimum tap changing voltage of the electrolyzer is reached.

In one embodiment, the on-load tap changing transformer is adapted to change a tap selection, particularly between the first tap and the second tap, when the self-commutated converter adjusts the voltage of the electrical power input to the tap changing voltage. In other words, the on-load tap changing transformer may be adapted to switch from the first selected tap to the second tap, wherein the on-load tap changing transformer may be adapted to provide a higher voltage of the electrical power output to the converter when the second tap is selected than when the first tap is selected.

Additionally, the self-commutated converter may be adapted to maintain its operation or to continue to adjust the voltage of the electrical power input to the tap changing voltage during the change of the tap selection. Here, the on-load tap changing transformer may be adapted such that the change of the tap selection may provide a voltage of the electrical power input which may remain within a ramp-up and/or ramp-down limit of the electrolyzer.

This provides the advantage that the electrolyzer can be operated safely, particularly during a ramp-up and a ramp-down procedure, since the on-load tap changing transformer may only be operated when the tap changing voltage of the electrolyzer is reached.

Further, increasing the voltage by means of changing the tap selection of the on-load tap changing transformer may further reduce a current harmonics feedback.

In one embodiment, the on-load tap changing transformer is adapted to alter the change of the tap selection, particularly to select a third tap instead of the second tap, corresponding to an aging parameter of the electrolyzer. In other words, the on-load tap changing transformer may be adapted to replace the selected second tap by a third tap, wherein the on-load tap changing transformer may be adapted to provide a higher voltage of the electrical power output to the converter than when the second tap is selected. This can compensate a shifted current-voltage characteristic of the electrolyzer due to aging.

Additionally, the on-load tap changing transformer may be adapted such that the change of the tap selection from the second tap to the third tap may provide a voltage increase of the electrical power input which may be adapted to compensate an aging effect of the electrolyzer.

The aging effect may be determined by means of the aging parameter which may comprise a duration of operation of the electrolyzer and/or a time distance to a recent maintenance of the electrolyzer.

Additionally, the on-load tap changing transformer may be adapted to provide an amount of steps between the second tap and the third tap for compensating the aging of the electrolyzer based on the aging parameter.

This provides the advantage that aging effects can be compensated for a safe operation over the whole life of the electrolyzer.

In one embodiment, the self-commutated converter is adapted to adjust the voltage of the electrical power input to a rated operating voltage of the electrolyzer, which particularly is higher than the tap changing voltage, at the selected second tap of the on-load tap changing transformer. In other words, the self-commutated converter may be adapted to drop and/or boost the voltage of the electrical power input to the rated operating voltage when the second tap is selected. The rated operating voltage point may be between the minimum operating voltage and a maximum operating voltage of the electrolyzer. Here, the term "between" may mean "higher than" or "lower than" and/or "equal to". This provides the advantage that the electrolyzer can be operated more efficiently due to increased voltage and less currents. Further, the converter needs to boost or drop less such that a feedback of current harmonics to the electrical grid can be decreased.

In one embodiment, the self-commutated converter is adapted to adjust the voltage of the electrical power input corresponding to a current-voltage characteristic of the electrolyzer, particularly between the polarization voltage and the tap changing voltage and/or between the tap changing voltage and the rated operating voltage. In other words, the self-commutated converter and/or the on-load tap changing transformer at the selected first tap and/or at the selected second tap and/or at the selected third tap may be adapted to boost or to drop the voltage of the electrical power input corresponding to a ramp-up and/or ramp-down characteristic of the electrolyzer. The current-voltage characteristic may correspond to a current-voltage curve of the electrolyzer operation or to ramp-up and/or ramp-down limit. Further, the term "between" may mean "higher than" or lower than" and/or "equal to". This provides the technical effect that the electrolyzer can be operated safely and may thus not be damaged or have to be shut down during operation.

Additionally, the on-load tap changing transformer may comprise a voltage difference between the taps such that a voltage difference of the electrical power output provided to the converter may be correspond to the current-voltage characteristic of the electrolyzer.

This provides the advantage that the electrolyzer is operated safely, particularly corresponding to a ramp-up and/or ramp-down limit.

The invention further relates to a method for operating an electrolysis system comprising an electrolyzer and an on-load tap changing transformer, particularly a medium to low voltage on-load tap changing transformer, and a self-commutated converter which is electrically connected to the on-load tap changing transformer, wherein the on-load tap changing transformer receives an electrical power output from an electrical power source and provides the electrical power output to the self-commutated converter, wherein the self-commutated converter converts the electrical power output into an electrical power input for the electrolyzer, comprising the steps of:
- Adjusting a voltage of the electrical power input by means of the self-commutated converter to a tap changing voltage, which particularly is higher than or equal to a minimum operating voltage of the electrolyzer, at a selected first tap and/or at a selected second tap of the on-load tap changing transformer;
- Changing a tap selection of the on-load tap changing transformer, particularly between the first tap and the second tap, at the tap changing voltage.

In other words, the self-commutated converter may boost the voltage of the electrical power input to the tap changing voltage when the first tap of the on-load tap changing converter is selected and/or may drop the voltage of the electrical power input to the tap changing voltage when the second tap and/or a third tap of the on-load tap changing converter is selected. The on-load tap changing transformer may provide a lower voltage of the electrical power output to the self-commutated converter when the first tap of the on-load tap changing transformer is selected than when the second tap is selected. Further, the on-load tap changing transformer may provide a higher voltage of the electrical power output to the self-commutated converter when the third tap is selected than when the second tap is selected. Thus, the tap of the on-load tap changing transformer may only be switched when the self-commutated converter may adjust the voltage of the electrical power input by means of the self-commutated converter to the tap changing voltage. This provides the technical effect that the electrolyzer may be operated safely and an unwanted shutdown can be avoided.

In one embodiment, the method further comprises the step or steps of:
- Adjusting the voltage of the electrical power input by means of the self-commutated converter between a polarization voltage and the tap changing voltage of the electrolyzer at the selected first tap of the on-load tap changing transformer, wherein the polarization voltage particularly is lower than the minimum operating voltage of the electrolyzer; and/or
- Adjusting the voltage of the electrical power input by means of the self-commutated converter between the tap changing voltage and a rated operating voltage of the electrolyzer, which particularly is higher than the tap changing voltage, at the selected second tap of the on-load tap changing transformer.

In other words, the self-commutated converter may boost the voltage of the electrical power input from the polarization voltage to the tap changing voltage when the first tap of the on-load tap changing transformer is selected. Here, the term "between" may mean "higher than" or "lower than" and/or "equal to". In particular, the on-load tap changing transformer may provide an alternating voltage of the electrical power output to the converter that corresponds to a direct polarization voltage of the electrolyzer when the first tap is selected.

Additionally or alternatively, the self-commutated converter may boost and/or drop the voltage from the tap changing voltage to the rated operating voltage when the second tap of the on-load tap changing transformer is selected. In particular, the transformer may provide a higher voltage of the electrical power output to the converter when the second tap is selected than when the first tap is selected.

This provides the advantage that the electrolyzer can be operated safely, particularly during a ramp-up and a ramp-down procedure, since the on-load tap changing transformer may only be operated when the tap changing voltage of the electrolyzer is reached.

In one embodiment, the self-commutated converter adjusts the voltage of the electrical power input corresponding to a current-voltage characteristic of the electrolyzer, particularly between the polarization voltage and the tap changing voltage and/or between the tap changing voltage and the rated operating voltage. In other words, the self-commutated converter may boost or drop the voltage within a ramp-up and/or ramp-down limit of the electrolyzer between the polarization voltage and the tap changing voltage when the first tap of the on-load tap changing transformer is selected. The current-voltage characteristic may comprise the ramp-up and/or ramp-down limit of the respective electrolyzer. Here, the term "between" may mean "higher than" or "lower than" and/or "equal to".

Additionally or alternatively, the self-commutated converter may boost or drop the voltage within a ramp-up and/or ramp-down limit of the electrolyzer between the tap changing voltage and the rated operating voltage when the second tap and/or the third tap of the on-load tap changing transformer is selected.

This provides the advantage that the electrolyzer is operated safely and prevented from an unwanted shutdown.

In one embodiment, changing the tap selection of the on-load tap changing transformer is altered, particularly a third tap is selected instead of the second tap, corresponding to an aging parameter of the electrolyzer. In other words, the on-load tap changing transformer may adjust the tap selection or increase the voltage on the converter side of the transformer based on the aging parameter of the electrolyzer. Based on the aging parameter, the on-load tap changing transformer may select the third tap instead of the second tap, wherein the transformer may provide a higher voltage of the electrical power output to the converter when the third tap is selected than when the second tap is selected. The aging parameter may be received from an electrolyzer controller, wherein the aging parameter may particularly comprise a duration of operation of the electrolyzer and/or a time distance to a recent maintenance of the electrolyzer. This provides the advantage that an aging of the electrolyzer can be compensated and further that a number of converters can be reduced for the entire lifetime of the electrolyzer from beginning of life to end of life of the electrolyzer.

The invention further relates to a computer-program comprising instructions which, when the program is executed by a controller, particularly an electrolyzer controller and/or a converter controller and/or a tap changer controller, cause the controller to carry out the steps of said method. The controller may comprise means to execute said method, particularly means to convert an alternating current electrical power output from an electrical power source into a direct current electrical power input for an electrolyzer and/or comprise means to drop and/or boost a voltage of the electrical power input to the electrolyzer.

Additionally or alternatively, the controller may comprise means to switch a tap of the on-load tap changing transformer and/or means to display when a tap selection is to be changed and/or which tap is to be selected for a manual operation of the on-load tap changing transformer.

The invention also relates to a computer-readable storage medium having stored thereon said computer program. In other words, the computer-readable storage medium may be a punched card, a (floppy) disk storage medium, a hard disk, a CD, a DVD, an USB (Universal Serial Bus) storage device, a RAM (Random Access Memory), a ROM (Read Only Memory) and/or an EPROM (Erasable Programmable Read Only Memory). Preferably, the computer-readable storage medium may be a RAM or a ROM, wherein particularly a flash memory is used. The computer readable-storage medium may also be a data communication network which allows downloading a program code, such as the Internet for example, or further systems.

The invention further relates to a controller, particularly an electrolyzer controller and/or a converter controller and/or a tap changer controller, comprising said computer-readable storage medium. The controller may be programmable logic controller (PLC). The controller may comprise at least one processor and said computer-readable storage medium, wherein the computer-readable storage medium comprises said computer program which, when executed by the at least one processor, cause the controller to perform the method as described above.

In other words, the at least one processor may be a microprocessor and/or a microcontroller and/or a FPGA (Field Programmable Gate Array) and/or a DSP (Digital Signal Processor).

The controller may comprise means to execute said method, particularly means to convert an alternating current electrical power output from an electrical power source into a direct current electrical power input for an electrolyzer and/or comprise means to drop and/or boost a voltage of the electrical power input to the electrolyzer.

Additionally or alternatively, the controller may comprise means to switch a tap of the on-load tap changing transformer and/or means to display when a tap selection is to be changed and/or which tap is to be selected for a manual operation of the on-load tap changing transformer.

The invention also relates to an electrolysis system comprising said controller and/or said electrolyzer power supply system. The electrolysis system may comprise an electrolyzer and said electrolyzer power supply system.

The invention also relates to realizations comprising a combination of the features of several of the described embodiments.

### Brief description of the drawings

The present disclosure will be more readily appreciated by reference to the following detailed description when being considered in connection with the accompanying drawings in which:
- Figure 1: shows a schematic view of an electrolysis system comprising the electrolyzer power supply system and an electrolyzer;
- Figure 2: schematically shows a typical current-voltage characteristic according to which an electrolyzer is operated;
- Figure 3: schematically shows a change in the current-voltage characteristic of the electrolyzer between a beginning of life and an end of life of the electrolyzer; and
- Figure 4: schematically shows a flow diagram of a method for operating the electrolyzer power supply system and the electrolyzer.

### Description of the embodiments

In the following, the invention will be explained in more detail with reference to the accompanying figure. In the Figure, like elements are denoted by identical reference numerals and repeated description thereof may be omitted in order to avoid redundancies.

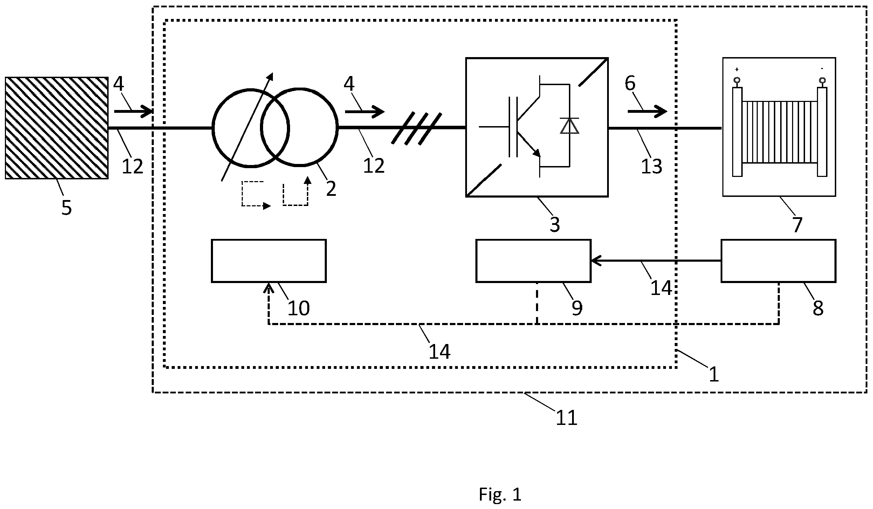

Figure 1 schematically shows an electrolysis system 11 comprising an electrolyzer 7 and an electrolyzer supply system 1, wherein the electrolyzer supply system 1, particularly the transformer 2, is connected to the electrical power source 5 via an alternating current electrical connection 12. The electrical power source 5 may be a generator of a power plant, particularly of a renewable power plant, or an electrical grid, which provide their electrical power output to the transformer 2 of the electrolyzer power supply system 1 via the alternating current electrical connection 12, particularly at medium voltage level. The alternating current electrical connection 12 may thus comprise additional transformers, particularly from high-voltage to medium-voltage level which are not shown.

The transformer 2 is an on-load tap changing transformer 2 which is electrically connected to the self-commutated converter 3 by means of the alternating current electrical connection 12, particularly at low voltage level. The on-load tap changing transformer 2 is adapted to increase the voltage of the electrical power output 4 from the electrical power source 5 on a converter side of the on-load tap changing transformer 2 where the on-load tap changing transformer 2 is electrically connected to the converter by changing a tap selection of the on-load tap changer. The tap changer of the on-load tap changing transformer 2 is adapted to change from a selected first tap to a second or third tap, wherein the on-load tap changing transformer 2 is adapted to provide a lower voltage of the electrical power output 4 to the converter 3 when the first tap is selected than when the second or third tap is selected. Here, the first tap may correspond to a minimum voltage level of the electrical power output 4 provided to the converter 3 which may be rectified and optionally be dropped to a polarization voltage ***U_{P}*** of the electrolyzer 7 by the converter 3.

The converter 3 is a self-commutated converter 3 which converts the alternating voltage of the electrical power output provided by the transformer 2 to the converter 3 into a direct voltage of electrical power input 6 for the electrolyzer 7.

Additionally, the converter 3 may be adapted to boost and/or drop the voltage of the electrical power input 6 of the electrolyzer 7, particularly between the polarization voltage *U_{E}* and the tap changing voltage *U_{Tap}* of the electrolyzer 7 and/or between the tap changing voltage *U_{Tap}* and a rated operating voltage *U_{Op}* of the electrolyzer 7.

In particular, the converter 3 is adapted to adjust the voltage of the electrical power input 6 within a ramping-up and/or ramping-down limit of the electrolyzer 7. To perform these operations, the self-commutated converter 3 may be an insulated gate bipolar (IGBT) type converter.

The electrolyzer 7 transforms the electrical power input 6 the received from the converter 3 into an energy carrier by means of an electrolysis process, wherein the energy carrier may be hydrogen, for instance.

The on-load tap changing transformer 2 switches the selected tap when the converter 3 adjusts the voltage of the electrical power input 6 to the tap changing voltage *U_{Tap}* of the electrolyzer 7, which is higher than or equal to a minimum operating voltage *Uₘᵢₙ* of the electrolyzer 7. Here, the polarization voltage *U_{P},* the tap changing voltage *U_{Tap}* and/or the minimum operating voltage *Uₘᵢₙ* and/or the maximum operating voltage *Uₘₐₓ* may correspond to a respective type of the electrolyzer 7. The polarization voltage *U_{P}* corresponds to a voltage level of the electrolyzer 7 where the anode and cathode may receive a polarization where the electrolysis process does not commence. The minimum operating voltage *Uₘᵢₙ* and maximum operating voltage *Uₘₐₓ* may denote an operation interval of the electrolyzer 7, where the electrolysis process takes place. The operating voltage *U_{Op}* is thus between the minimum operating voltage *Uₘᵢₙ* and the maximum operating voltage *Uₘₐₓ.*

The electrolysis system 11 comprises an electrolyzer controller 8 which may be connected to the converter controller 9 and/or optionally to the tap changer controller 10 by means of the data connection 14. The electrolyzer power supply system 11 comprises the converter controller 9 and optionally the tap changer controller 10. Alternatively, the on-load tap changing transformer 2 may be operated manually.

The electrolyzer controller 8 may control the converter controller 9 for adjusting the voltage *U_{E}* of the electrical power input 6 and optionally the tap changer controller 10 for controlling a tap selection of the on-load tap changing transformer 10.

Alternatively, the converter controller 9 may control the tap changer controller 10 for controlling the tap selection of the on-load tap changing transformer 10.

Alternatively, the electrolyzer controller 8 and/or the converter controller 9 may output a signal indicating when the tap selection is to be changed and/or which tap is to be selected for a manual operation of the on-load tap changing transformer 2.

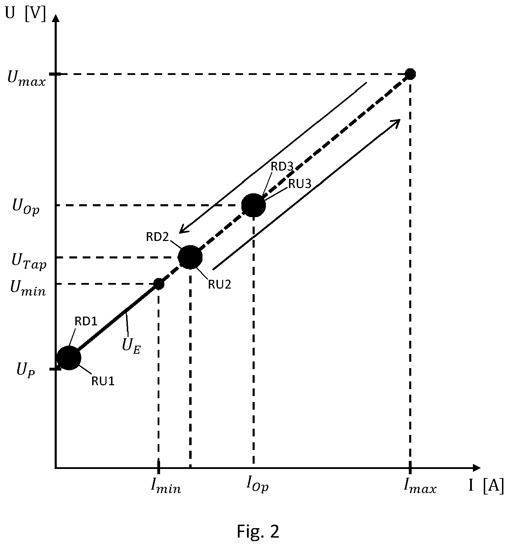

Figure 2 schematically shows a method for operating the electrolyzer 7 by means of the electrolyzer power supply system 1 according to a current-voltage characteristic of the electrolyzer 7. The current-voltage characteristic of the electrolyzer 7 may correspond to a ramp-up and/or ramp-down limit or behavior of the electrolyzer 7 and is depicted as a current-voltage curve *(I-U* curve), wherein the voltage ***U_{E}*** of the electrical power input is adjusted by the converter 3 corresponding to the current-voltage characteristic. The electrolyzer 7 has got a polarization voltage ***U_{P}*** where no electrolysis reaction may occur. The electrolyzer 7 performs the electrolysis process between the minimum operating voltage ***Uₘᵢₙ*** and the maximum operating voltage *Uₘₐₓ* at their respective corresponding minimum operating current *Iₘᵢₙ* and maximum operating current *Iₘₐₓ.* The tap changing voltage *U_{Tap}* is higher than or equal to the minimum operating voltage *Uₘᵢₙ* and may indicate an operating point of the electrolyzer 7, where a change of the tap selection of the on-load tap changing transformer remains within a ramp-up and/or ramp-down limit of the electrolyzer 7.

The line in the *I-U* diagram of Figure 2 indicates the voltage *U_{E}* of the electrical power input 6 provided by the converter 3 to the electrolyzer 7 which is adjusted by means of the converter 3 and/or the on-load tap changing transformer 2 between the polarization voltage *U_{P}* and the maximum operating voltage *Uₘₐₓ* according to the following ramp-up procedure:

In a first ramp-up step RU1, the electrolyzer power supply system 1 selects a first tap of the on-load tap changing transformer 2, wherein the on-load tap changing transformer 2 provides a voltage of the electrical power output 4 to the converter 3, which may be rectified into the direct polarization voltage *U_{E}* of the electrolyzer 7 by the converter 3, when the first tap is selected. For instance, the voltage of the electrical power output 4 provided by the on-load tap changing transformer 2 to the converter may be the smallest voltage among the voltages of the electrical power output the on-load tap changing transformer is adapted to provide to the converter 3.

The converter 3 adjusts, particularly boosts, the voltage *U_{E}* of the electrical power input 6, which is provided to the electrolyzer 7 by the converter 3, from the polarization voltage *U_{P}* until it reaches the tap changing voltage *U_{Tap}.* The tap changing voltage *U_{Tap}* is higher than or equal to a minimum operating voltage *Uₘᵢₙ* of the electrolyzer 7 and may indicate a voltage level of the electrolyzer 7 which allows a change of the tap selection of the on-load tap changing transformer 2. The minimum operating voltage should be determined based on the minimum electrolyzer load, electrolyzer behavior, or other internal considerations. In the first ramp-up step RU1, the selected first tap of the on-load tap changing transformer 2 is not changed, yet.

Once the voltage *U_{E}* of the electrical power input 6 provided by the converter 3 to the electrolyzer 7 has reached the tap changing voltage *U_{Tap},* the tap selection of the on-load tap changing transformer 2 is changed in the second ramp-up step RU2, wherein a second tap of the on-load tap changing transformer 2 is selected. The on-load tap changing transformer 2 is adapted to provide a higher voltage of the electrical power output 4 to the converter 3 when the second tap is selected than when the first tap is selected. Thus, the on-load tap changing transformer 2 provides an alternating voltage to the converter 3 which is higher than the voltage when the first tap is selected. For this, the electrolyzer controller 8 and/or the converter controller 9 may output a signal via the data connection 14 to change from the first tap to the second tap. The signal may be a command for the tap changer controller 10 and/or a notification for performing a manual tap selection operation of the on-load tap changing transformer 2.

Additionally, during the change of the tap selection, the converter 3 may continue its operation of providing the tap changing voltage *U_{Tap}.*

Additionally, the change of the tap selection is altered based on an aging parameter of the electrolyzer 7. Particularly, a third step of the on-load tap changing transformer 2 is selected instead of the second tap, wherein the on-load tap changing transformer 2 is adapted to provide a higher voltage of the electrical power output 4 to the converter 3 when the third tap is selected than when the second tap is selected. Thus, the third tap replaces the second tap. The voltage difference between the third tap and the second tap may allow a compensation of an aging effect of the electrolyzer 7.

Once the second tap has been selected, the converter adjusts, particularly boosts or drops, the voltage *U_{E}* of the electrical power input 6 to a rated operating voltage *U_{Op}* of the electrolyzer 7 in a third ramp-up step RU3, wherein the rated operating voltage *U_{Op}* may be between the tap changing voltage *U_{Tap}* and the maximum operating voltage *Uₘₐₓ.*

Additionally after the third ramp-up step RU3, the converter 3 adjusts, particularly boosts and/or drops, the voltage *U_{E}* of the electrical power input 6 upwards and downwards between the minimum operating voltage *Uₘᵢₙ* and the maximum operating voltage *Uₘₐₓ* during an operation of the electrolyzer 7. Here, the on-load tap changing transformer 2 is kept in the selected second or third tap.

The voltage *U_{E}* of the electrical power input 6 provided by the converter 3 to the electrolyzer 7 is adjusted by means of the converter 3 and/or the on-load tap changing transformer 2 between the maximum operating voltage *Uₘₐₓ* and the polarization voltage *U_{P}* according to the following ramp-down procedure:
For the first ramp-down step RD1, the converter adjusts, particularly drops, the voltage *U_{E}* of the electrical power input 6 from the current rated operating voltage *U_{Op}* to the tap changing voltage *U_{Tap}.* During the first ramp-down step, the tap of the on-load tap changing transformer 2 remains at the second tap or third tap.

Once the self-commutated converter 3 has adjusted the voltage *U_{E}* of the electrical power input 6 to the minimum tap changing voltage *U_{Tap},* the tap selection of the on-load tap changing transformer 2 is changed from the selected second or third tap to the first tap at the second ramp-down step RD2.

Additionally, during the change of the tap selection, the converter 3 may maintain its operation of providing the tap changing voltage *U_{Tap}.*

Once the first tap of the on-load tap changing transformer 2 has been selected, the self-commutated converter adjusts the voltage *U_{E}* of the electrical power input 6 from the tap changing voltage *U_{Tap}* to the polarization voltage *U_{P}* of the electrolyzer 7. Additionally, the electrolyzer 7 may be shut down.

For said steps of ramping-up and ramping-down, the converter 3 adjusts the voltage *U_{E}* of the electrical power input 6 corresponding to the current-voltage characteristic of the electrolyzer 7, particularly within the ramp-up and/or ramp-down limit of the electrolyzer 7.

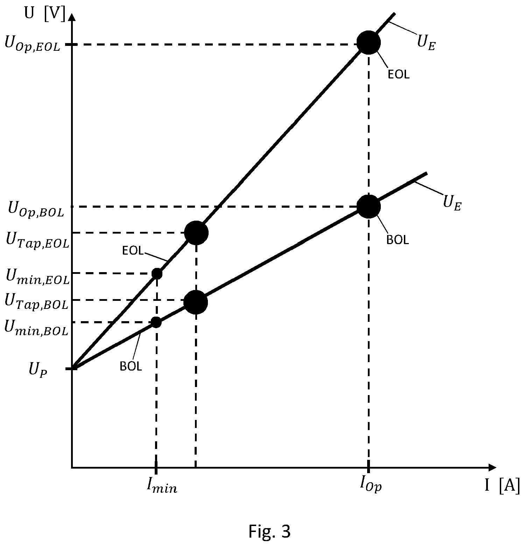

Due to an aging of the electrolyzer 7, the current-voltage characteristic of the electrolyzer 7 may change or shift. Figure 3 schematically shows a further step for adapting the method of Figure 2 to an aging of the electrolyzer 7.

Figure 3 schematically shows how the current voltage characteristic of the electrolyzer 7 differs with respect to the states at a beginning of life BOL and an end of life EOL of the electrolyzer 7. At the end of life EOL, the electrolyzer 7 may require a higher voltage for the same current as depicted in Figure 3, where the minimum operating voltage *U_{min,EOL}* of the electrolyzer 7 at the end of life EOL is higher than the minimum operating voltage *U_{min,EOL}* at the beginning of life BOL. The voltage difference to compensate between the beginning of life BOL and the end of life EOL may be indicated by means of an aging parameter, such as operating hours of the electrolyzer for instance. However, the operation and methodology of ramping up and down remain the same throughout the life of the electrolyzer 7 as schematically depicted in Figure 2 for the beginning of life BOL and the end of life EOL. Thus, the method is the same in both situations of beginning of life BOL and end of life EOL.

The only difference between the beginning of life BOL and end of life EOL of the electrolyzer 7 is that the change of the tap selection of the on-load tap changing transformer 2 is to be performed differently. As shown in Figure 3, the electrolyzer 7 requires an elevated amount of voltage *U_{E}* of the electrical power input at the end of life EOL than at the beginning of life BOL. This voltage difference can be compensated by adjusting the change of the tap selection corresponding to the aging parameter. Said change of the tap selection comprises replacing the selected second tap with a third tap, wherein the on-load tap changing transformer 2 is adapted to provide a higher voltage of the electrical power output 4 to the converter 3 when the third tap is selected than when the second tap is selected. A difference between the second tap and the third tap is determined based on the aging parameter. Thus, the third tap provides a higher voltage at the converter side of the on-load tap changing transformer 2 than the second selected tap.

For instance, the tap selection is changed at the beginning of life BOL to step x as the selected second tap of the on-load tap changing transformer 2, where the tap changing voltage at the beginning of life *U_{Tap,BOL}* is reached. At the end of life EOL, the tap changing voltage *U_{Tap,BOL}* may change to a higher tap changing voltage *U_{Tap,EOL}* at the same minimum loading current *Iₘᵢₙ*, wherein the difference between *U_{Tap,EOL}* and *U_{Tap,BOL}* requires *n* additional steps of the on-load tap changing transformer 2 to compensate. Thus, the third selected tap replacing the second selected tap may comprise *x* + *n* steps for compensating the minimum operating voltage difference between *U_{Tap,EOL}* and *U_{Tap,BOL}.* The number *n* of additional steps may be derived from the aging parameter. Thus, the age of the electrolyzer 7 can be compensated by altering the tap selection of the on-load tap changing transformer 2, particularly for reaching the respective tap changing voltage *U_{Tap,BOL}, U_{Tap,EOL}* for the same operating current *I_{Op}* corresponding to the aging parameter.

Additionally, an operation of the converter 3, particularly a boost factor of the converter 3, may be adjusted for reaching the minimum operating voltage *U_{min,BOL}, U_{min,EOL}* corresponding to the aging parameter.

The converter 3 is adapted to adjust the respective operating voltage at the beginning of life *U_{Op,BOL}* and the operating voltage at the end of life *U_{Op,EOL}* between the respective minimum operating voltage *U_{min,BOL}, U_{min,EOL}* and maximum voltage *Uₘₐₓ* and/or between the polarization voltage *U_{P}* and the respective minimum operating voltage *U_{min,BOL}, U_{min,EOL}* corresponding to the aging parameter and/or the respective current-voltage characteristic at the beginning of life BOL and end of live EOL.

Consequently, the on-load tap changing transformer 2 may be designed with an increased number of steps to meet the current-voltage characteristic of the electrolyzer 7 respectively at the beginning of life BOL and the end of life EOL.

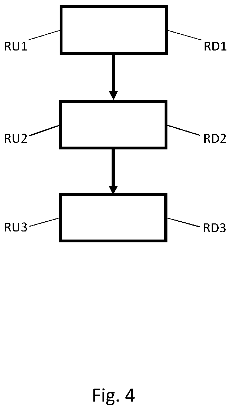

Figure 4 shows a schematic flow diagram of a method for ramping the electrolyzer 7 up and down.

For ramping the electrolyzer 7 up, the following steps RU1 to RU3 are performed:
In a first ramp-up step RU1, the electrolyzer power supply system 1 selects a first tap of the on-load tap changing transformer 2. For instance, the voltage of the electrical power output 4 provided by the on-load tap changing transformer 2 to the converter may be the smallest voltage among the voltages of the electrical power output 4 which the on-load tap changing transformer is adapted to provide to the converter 3. The converter 3 adjusts, particularly boosts, the voltage *U_{E}* of the electrical power input 6, which is provided to the electrolyzer 7 by the converter 3, from the polarization voltage *U_{P}* until it reaches the tap changing voltage *U_{Tap}.* In the first ramp-up step RU1, the selected first tap of the on-load tap changing transformer 2 is not changed.

Once the voltage *U_{E}* of the electrical power input 6 provided by the converter 3 to the electrolyzer 7 has reached the tap changing voltage *U_{Tap},* the tap selection of the on-load tap changing transformer 2 is changed in the second ramp-up step RU2, wherein a second tap of the on-load tap changing transformer 2 is selected. The on-load tap changing transformer 2 may be adapted to provide a higher voltage of the electrical power output 4 to the converter 3 when the second tap is selected than when the first tap is selected. Particularly, the electrolyzer controller 8 and/or the converter controller 9 may output a signal via the data connection 14 to change from the first tap to the second tap. The signal may be a command for the tap changer controller 10 and/or a notification for performing a manual tap selection operation of the on-load tap changing transformer 2.

Additionally, during the change of the tap selection, the converter 3 may continue to provide the tap changing voltage *U_{Tap},* particularly may maintain its operation.

Additionally, the change of the tap selection is altered based on an aging parameter of the electrolyzer 7. Particularly, a third step of the on-load tap changing transformer 2 is selected instead of the second tap, wherein the on-load tap changing transformer 2 may be adapted to provide a higher voltage of the electrical power output 4 to the converter 3 when the third tap is selected than when the second tap is selected. The voltage difference between the third tap and the second tap may allow a compensation of an aging of the electrolyzer 7.

Once the second tap has been selected, the converter adjusts, particularly boosts or drops, the voltage *U_{E}* of the electrical power input 6 to a rated operating voltage *U_{Op}* of the electrolyzer 7 in a third ramp-up step RU3, wherein the rated operating voltage *U_{Op}* may be between the tap changing voltage *U_{Tap}* and the maximum operating voltage *Uₘₐₓ.*

Additionally after the third ramp-up step RU3, the converter 3 adjusts, particularly boosts and/or drops, the voltage *U_{E}* of the electrical power input 6 upwards and downwards between the minimum operating voltage *Uₘᵢₙ* and the maximum operating voltage *Uₘₐₓ* during an operation of the electrolyzer 7. Here, the on-load tap changing transformer 2 is kept in the selected second tap.

For ramping and/or or shutting the electrolyzer 7 down, the following steps RD1 to RD3 are performed:
For the first ramp-down step RD1, the converter adjusts, particularly drops, the voltage *U_{E}* of the electrical power input 6 from the current rated operating voltage *U_{Op}* to the tap changing voltage *U_{Tap}.* During the first ramp-down step RD1, the tap of the on-load tap changing transformer 2 remains at the second tap or third tap.

Once the self-commutated converter 3 has adjusted the voltage *U_{E}* of the electrical power input 6 to the minimum tap changing voltage *U_{Tap},* the tap selection of the on-load tap changing transformer 2 is changed from the selected second or third tap to the first tap at the second ramp-down step RD2.

Additionally, during the change of the tap selection, the converter 3 may continue to provide the tap changing voltage *U_{Tap},* particularly may maintain its operation.

Once the first tap of the on-load tap changing transformer 2 has been selected, the self-commutated converter adjusts the voltage *U_{E}* of the electrical power input 6 from the tap changing voltage *U_{Tap}* to the polarization voltage *U_{P}* of the electrolyzer 7. Additionally, the electrolyzer 7 may be shut down.

For said steps of ramping-up and ramping-down, the converter 3 adjusts the voltage *U_{E}* of the electrical power input 6 corresponding to the current-voltage characteristic of the electrolyzer 7, particularly within the ramp-up and/or ramp-down limit of the electrolyzer 7.

The present solution overcomes the limitation of the previous solution available on the market and optimizes the IGBT converter capability required for electrolysis applications, wherein the operation of the electrolysis is guaranteed in all situations based on the electrolysis state (Beginning of Life BOL or End of Life EOL).

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention.

## Claims

1. Electrolyzer power supply system (1) comprising a transformer (2), particularly a medium to low voltage transformer (2), and a converter (3) which is electrically connected to the transformer (2), wherein the transformer (2) is adapted to receive an electrical power output (4) from an electrical power source (5) and to provide the electrical power output (4) to the converter (3), wherein the converter (3) is adapted to convert the electrical power output (4) into an electrical power input (6) for an electrolyzer (7),
**characterized in that**
the transformer (2) is an on-load tap changing transformer (2) and the converter (3) is a self-commutated converter (3).

2. Electrolyzer power supply system (1) according to claim 1, **characterized in that** the self-commutated converter (3) is adapted to adjust a voltage (*U_{E}*) of the electrical power input (6) to a polarization voltage (*U_{P}*) of the electrolyzer (7) at a selected first tap of the on-load tap changing transformer (2), wherein the polarization voltage (*U_{P}*) particularly is lower than a minimum operating voltage (*Uₘᵢₙ*) of the electrolyzer (7).

3. Electrolyzer power supply system (1) according to one of the preceding claims, **characterized in that** the self-commutated converter (3) is adapted to adjust the voltage (*U_{E}*) of the electrical power input (6) to a tap changing voltage (*U_{Tap}*) of the electrolyzer (7), which particularly is higher than or equal to the minimum operating voltage (*Uₘᵢₙ*) of the electrolyzer (7), at the selected first tap and/or at a selected second tap of the on-load tap changing transformer (2).

4. Electrolyzer power supply system (1) according to claim 3, **characterized in that** the on-load tap changing transformer (2) is adapted to change a tap selection, particularly between the first tap and the second tap, when the self-commutated converter (3) adjusts the voltage (*U_{E}*) of the electrical power input (6) to the tap changing voltage (*U_{Tap}*)*.*

5. Electrolyzer power supply system (1) according to claim 4, **characterized in that** the on-load tap changing transformer (2) is adapted to alter the change of the tap selection, particularly to select a third tap instead of the second tap, corresponding to an aging parameter *(BOL, EOL)* of the electrolyzer (7).

6. Electrolyzer power supply system (1) according to one of the preceding claims, **characterized in that** the self-commutated converter (3) is adapted to adjust the voltage (*U_{E}*) of the electrical power input (6) to a rated operating voltage (*U_{Op}*) of the electrolyzer (7), which particularly is higher than the tap changing voltage (*U_{Tap}*)*,* at the selected second tap of the on-load tap changing transformer (2).

7. Electrolyzer power supply system (1) according to one of the preceding claims, **characterized in that** the self-commutated converter (3) is adapted to adjust the voltage (*U_{E}*) of the electrical power input (6) corresponding to a current-voltage characteristic of the electrolyzer (7), particularly between the polarization voltage (*U_{P}*) and the tap changing voltage (*U_{Tap}*) and/or between the tap changing voltage (*U_{Tap}*) and the rated operating voltage (*U_{Op}*).

8. Method for operating an electrolysis system comprising an electrolyzer (7) and an on-load tap changing transformer (2), particularly a medium to low voltage on-load tap changing transformer (2), and a self-commutated converter (3) which is electrically connected to the on-load tap changing transformer (2), wherein the on-load tap changing transformer (2) receives an electrical power output (4) from an electrical power source (5) and provides the electrical power output (4) to the self-commutated converter (3), wherein the self-commutated converter (3) converts the electrical power output (4) into an electrical power input (6) for the electrolyzer (7), comprising the steps of:
- Adjusting a voltage (*U_{E}*) of the electrical power input (6) by means of the self-commutated converter (3) to a tap changing voltage (*U_{Tap}*)*,* which particularly is higher than or equal to a minimum operating voltage (*Uₘᵢₙ*) of the electrolyzer (7), at a selected first tap and/or at a selected second tap of the on-load tap changing transformer (2);
- Changing a tap selection of the on-load tap changing transformer (2), particularly between the first tap and the second tap, at the tap changing voltage (*U_{Tap}*)*.*

9. Method according to claim 8, further comprising the step or steps of:
- Adjusting the voltage (*U_{E}*) of the electrical power input (6) by means of the self-commutated converter (3) between a polarization voltage (*U_{P}*) and the tap changing voltage (*U_{Tap}*) of the electrolyzer (7) at the selected first tap of the on-load tap changing transformer (2), wherein the polarization voltage (*U_{P}*) particularly is lower than the minimum operating voltage (*Uₘᵢₙ*) of the electrolyzer (7); and/or
- Adjusting the voltage of the electrical power input (6) by means of the self-commutated converter (3) between the tap changing voltage (*U_{Tap}*) and a rated operating voltage (*U_{Op}*) of the electrolyzer (7), which particularly is higher than the tap changing voltage (*U_{Tap}*)*,* at the selected second tap of the on-load tap changing transformer (2).

10. Method according to claim 8 or 9, wherein the self-commutated converter (3) adjusts the voltage (*U_{E}*) of the electrical power input (6) corresponding to a current-voltage characteristic of the electrolyzer (7), particularly between the polarization voltage (*U_{P}*) and the tap changing voltage (*U_{Tap}*) and/or between the tap changing voltage (*U_{Tap}*) and the rated operating voltage (*U_{Op}*)*.*

11. Method according to one of the claims 8 to 10, wherein changing the tap selection of the on-load tap changing transformer (2) is altered, particularly wherein a third tap is selected instead of the second tap, corresponding to an aging parameter (BOL, EOL) of the electrolyzer (7).

12. Computer program comprising instructions which, when the program is executed by a controller, particularly by an electrolyzer controller (8) and/or a converter controller (9) and/or a tap changer controller (10), cause the controller to carry out the steps of the method of one of the claims 8 to 11.

13. Computer-readable storage medium having stored thereon the computer program of claim 12.

14. Controller, particularly an electrolyzer controller (8) and/or a converter controller (9) and/or a tap changer controller (10), comprising a computer-readable storage medium having stored thereon the computer program of claim 12 and optionally means to execute the method of one of the claims 8 to 11.

15. Electrolysis system (11) comprising the controller of claim 14 and/or the electrolyzer power supply system (1) of one of the claims 1 to 7.
